(19) Europäisches Patentamt
European Patent Office
Office européen des brevets

(11) **EP 2 322 973 A1**

(12) **EUROPEAN PATENT APPLICATION**

(43) Date of publication:
**18.05.2011 Bulletin 2011/20**

(51) Int Cl.:
**G02B 27/09** (2006.01)    **H01L 33/58** (2010.01)
**F21V 5/04** (2006.01)

(21) Application number: **10189459.0**

(22) Date of filing: **29.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.11.2009 CN 200910309538**

(71) Applicant: **Foxsemicon Integrated Technology, Inc.**
**Miao-Li, Hsien 350 (TW)**

(72) Inventors:
• **Chen, Tien-Pao**
**350, Miao-Li Hsien (TW)**
• **Cheng, En-Tza**
**350, Miao-Li Hsien (TW)**

(74) Representative: **Wilson, Peter**
**Murgitroyd & Company**
**165-169 Scotland Street**
**Glasgow G5 8PL (GB)**

(54) **Lens and light emitting diode lamp using same**

(57)    A lens (20) includes a light receiving surface (24) and a light emitting surface (26) opposite to the light receiving surface (24). Light emitted by a light emitting diode (30) enters the lens (20) via the light receiving surface (24) and leaves the lens (20) via the light emitting surface (26). In a coordinate system, the light receiving surface (24) satisfies an equation (1):

$$Z_{S1} = \sum_{i=1}^{N_1} a_i X^{2i} + \sum_{j=1}^{N_2} b_j Y^j$$

, wherein $a_i$ and $b_j$ are aspheric coefficients. Key aspheric coefficients include $a_1$ and $b_1$, and $a_1$ and $b_1$ satisfy a formula: $-0.5 < a_1 < 0$, $-0.7 < b_1 < 0$. In the same coordinate system, the light emitting surface (26) satisfies an equation (2):

$$Z_{S2} = \sum_{i=1}^{N_1} c_i X^{2i} + \sum_{j=1}^{N_2} d_j Y^j$$

, wherein $c_i$ and $d_j$ are aspheric coefficients. Key aspheric coefficients include $c_1$ and $d_1$, and $c_1$ and $d_1$ satisfy a formula: $-0.3 < c_i < 0, 0 < d_i < 0.6$.

FIG. 4

EP 2 322 973 A1

**Description**

1. Technical Field

The present disclosure relates to optics and, particularly, to a lens and an light emitting diode lamp using the lens.

2. Description of Related Art

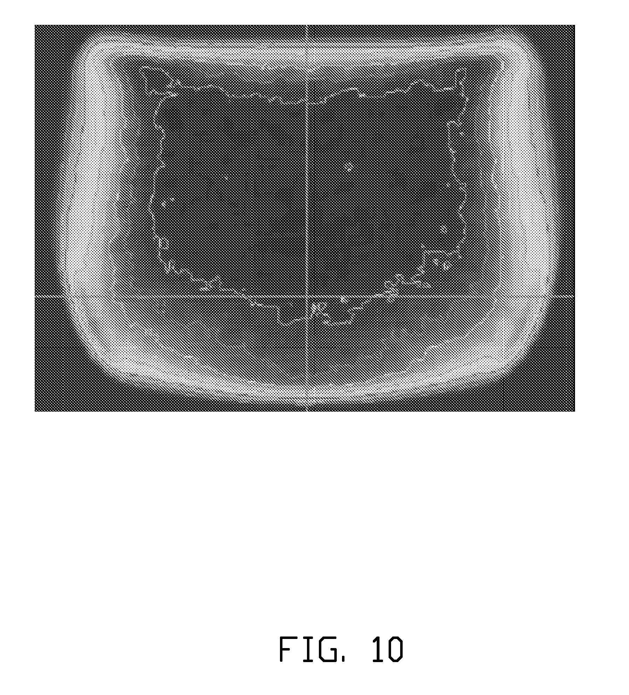

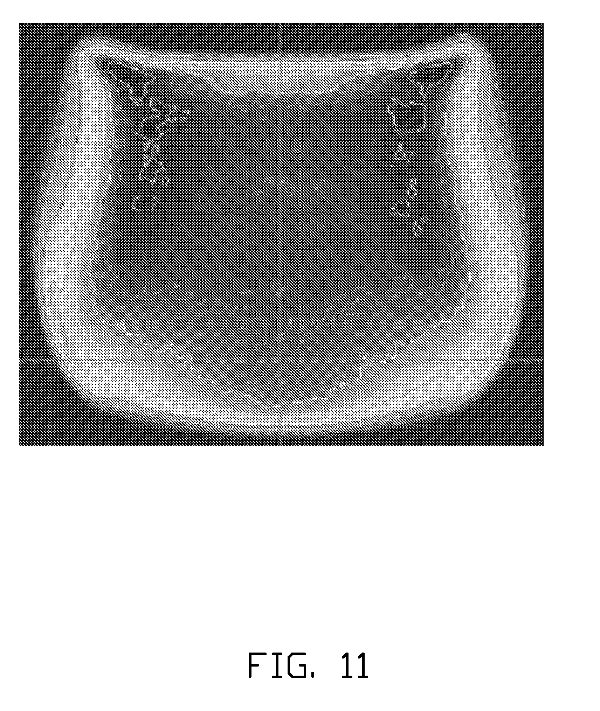

Due to their high brightness, long lifespan, and wide color range, light emitting diodes (LEDs) are preferred for use in illumination devices such as street lamps. Referring to FIG. 10, an LED lamp 10 includes a pole 12, a fixing arm 14 extending from the pole 12, and a light cover 16 mounted on the fixing arm 14 for receiving an LED (not shown) therein. An illumination distribution of light emitted from the LED is substantially circular and symmetric relative to a center of the LED (see FIG. 11). However, a central portion of the illumination distribution has a higher brightness than a peripheral portion of illumination distribution. Therefore, the illumination distribution of the LED lamp 10 is not uniform.

Therefore, it is needed to provide a lens and an LED lamp using the same, which can overcome the above-mentioned problems.

BRIEF DESCRIPTION OF THE DRAWINGS

Many aspects of the present lens and the present LED lamp can be better understood with reference to the following drawings. The components in the drawings are not necessarily to scale, the emphasis instead being placed upon clearly illustrating the principles of the lens and the LED lamp. Moreover, in the drawings, like reference numerals designate corresponding parts throughout the several views.

FIG. 1 is a schematic view of an LED lamp including a light source device, according to an exemplary embodiment.

FIG.2 is a sectional view of the light source device including a lens of the LED lamp of FIG. 1.

FIG. 3 is an isometric and schematic view of the lens of FIG. 2.

FIG. 4 is a sectional view taken long the line IV-IV of the lens of FIG. 3.

FIG. 5 shows exemplary light paths of the light source device of FIG. 2.

FIG. 6 shows a diagram of an illumination distribution of light emitted from the light source device of FIG. 2 in a first example.

FIG. 7 shows a diagram of an illumination distribution of light emitted from a light source device in a second example.

FIG. 8 shows a diagram of an illumination distribution of light emitted from a light source device in a third example.

FIG. 9 is a diagram of an illumination distribution of light emitted from a light source device in a fourth example.

FIG. 10 is a schematic view of an LED lamp including an LED, according to the related art.

FIG. 11 is a diagram of an illumination distribution of light emitted from the LED of FIG. 10.

DETAILED DESCRIPTION

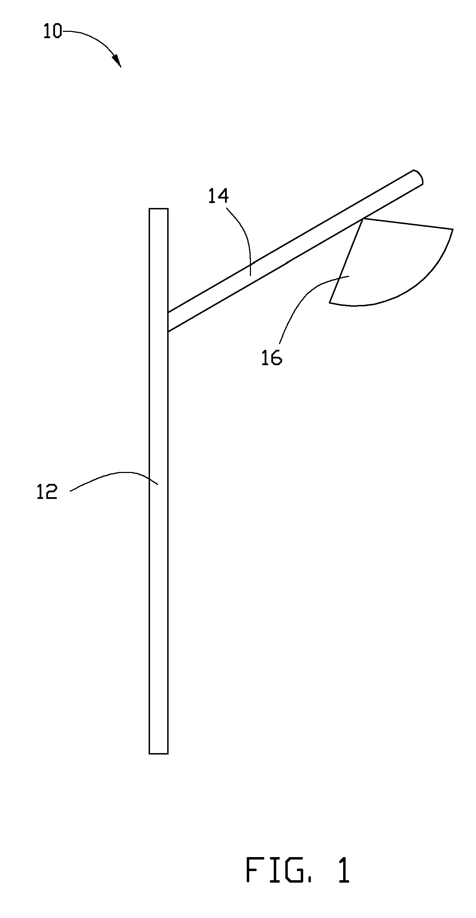

Referring to FIG. 1, an LED lamp 50, according to an exemplary embodiment, is shown. In this embodiment, the LED lamp 50 is a street lamp.

The LED lamp 50 includes a pole 52, a fixing arm 54, a light cover 58, and a light source device 40. The fixing arm 54 extends from the pole 52. The light cover 58 is mounted on a distal end 54a of the fixing arm 54 away from the pole 52. The light source device 40 is received in the light cover 58.

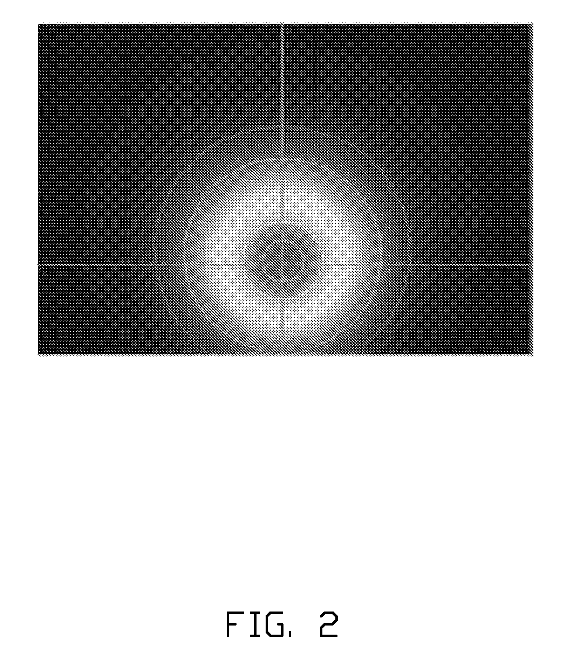

Referring to FIG. 2, the light source device 40 includes a lens 20 and an LED 30. The LED 30 is received in the lens 20.

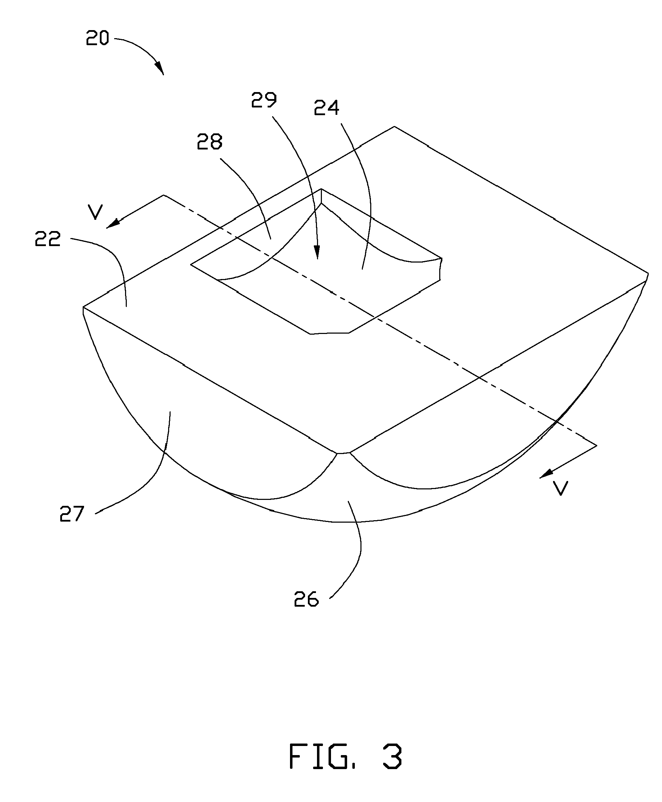

The lens 20 may be made of a transparent material, such as plastic or glass. The plastic is selected from the group consisting of polymethyl methacrylate (PMMA), polycarbonate (PC), and silicone. Referring to FIGs. 3-4, the lens 20 includes a bottom surface 22, a light receiving surface 24, a light emitting surface 26, four first side surfaces 27, and four second side surfaces 28. The light receiving surface 24 is positioned between the bottom surface 22 and the light emitting surface 26. The light emitting surface 26 is connected to the bottom surface 22 at four sides of the bottom surface 22 by the four first side surfaces 27. The light receiving surface 24 is connected to the bottom surface 22 at four sides of the light receiving surface 24 by the four second side surfaces 28. A receiving space 29 is cooperatively defined by the light receiving surface 24 and the four second side surfaces 28. The LED 30 is received in the receiving space 29 and emits light towards the light receiving surface 24.

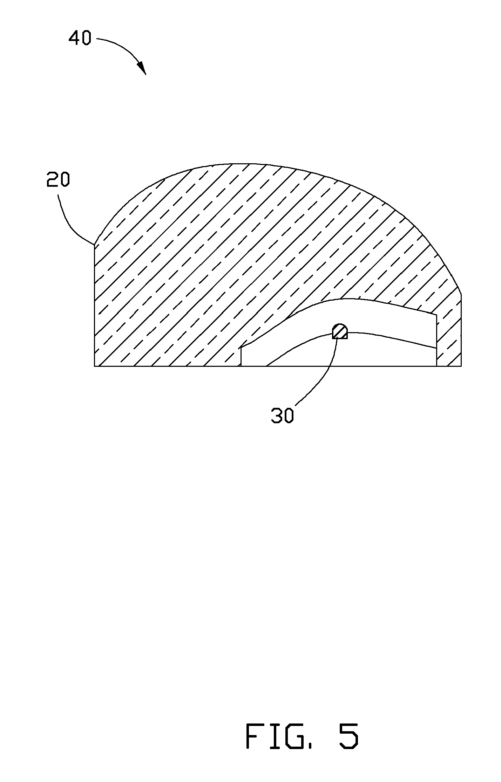

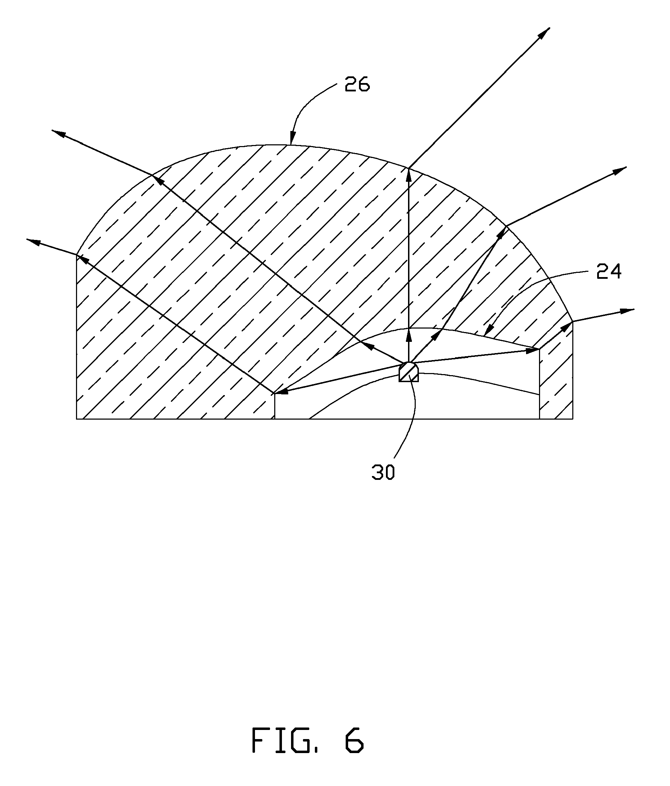

Referring to FIG. 5, light generated by the LED 30 emits towards the light receiving surface 24 and then passes through the lens 20 and finally is emitted from the light emitting surface 26. Referring to FIG. 6, an illumination distribution of the light emitted from the light emitting surface 26 is substantially rectangle and asymmetric relative to a center of the LED 30.

In a coordinate system, the light receiving surface 24 satisfies an equation (1):

, wherein $N_1$ and $N_2$ are natural numbers, and $a_i$ and $b_j$ are aspheric coefficients. When $N_2=1$, $a_1$ and $b_1$ are key aspheric coefficients and satisfy the following formulas: $-0.5<a_1<0$, $-0.7<b_1<0$. When $N_2 \geqq 2$, $a_1$, $b_1$, and $b_2$ are key aspheric coefficients and satisfy the following formulas: $-0.5 < a_1 < 0$, $-0.7 < b_1 < 0$, $-0.3 <b_2<0$. In the same coordinate system, the light emitting surface 26 satisfies an equation (2): $Z_{S2} = \sum_{i=1}^{N_1} c_i X^{2i} + \sum_{j=1}^{N_2} d_j Y^j$ , ,

wherein $N_1$ and $N_2$ are natural numbers, and $c_i$ and $d_j$ are aspheric coefficients. When $N_2=1$, $c_1$ and $d_1$ are key aspheric coefficients and satisfy the following formulas: $-0.3<c_1<0$, $0<d_1<0.6$. When $N_2 \geqq 2$, $c_1$, $d_1$, and $d_2$ are key aspheric coefficients and satisfy the following formulas: $-0.3<c_1<0, 0<d_1<0.6, -0.2<d_2<0$.

In the following disclosure, a plurality of examples are described in detail.

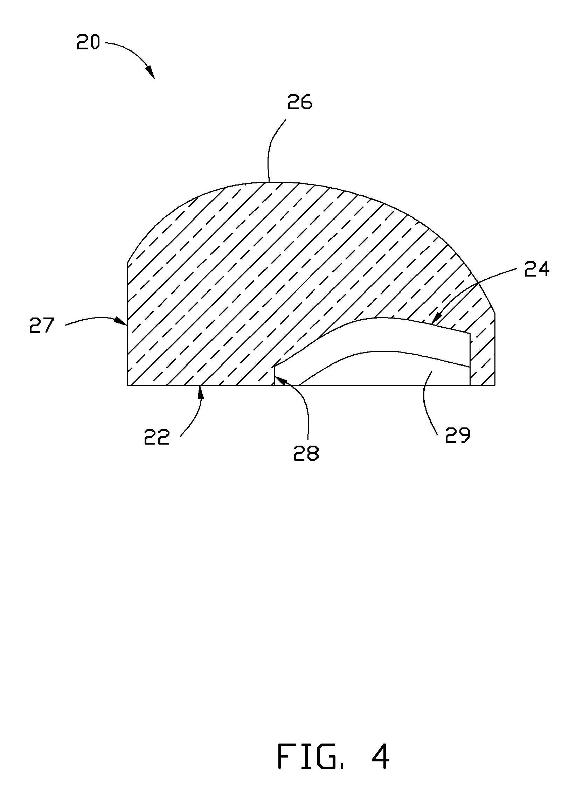

In a first example, when a thickness of the lens 20 is 5.75 millimeters, i.e., a height of the lens 20 measured from a top portion 24a of the light receiving surface 24 to a top portion 26a of the light emitting surface 26 (see FIG. 4), and the light receiving surface 24 in the coordinate system satisfies an equation (3): Zs1= $-0.33317477X^2+0.017585354X^4- 0.49846721Y- 0.124-03694Y^2+0.014682927Y^3+0.00586 0549Y^4+0.000377-86467Y^5-9.5791225e^{-6}Y^6-3.6177981e^{-7}Y^7$, and the light emitting surface 26 satisfies an equation (4): Zs2= $-0.0091912965X^2- 0.00029706043X^4+0.22221825Y-0.040709864Y^2+0.00019714964Y^3-0.00057313259Y^4+7.2463011e^{-5}Y^5- 3.1323774e^{-6}Y^6-3.5999606e^{-7}Y^7$, the illumination distribution of light emitted from the light source device 40 is shown in FIG. 6. As illustrated in FIG. 6, the illumination distribution of light emitted from the light source device 40 is uniform.

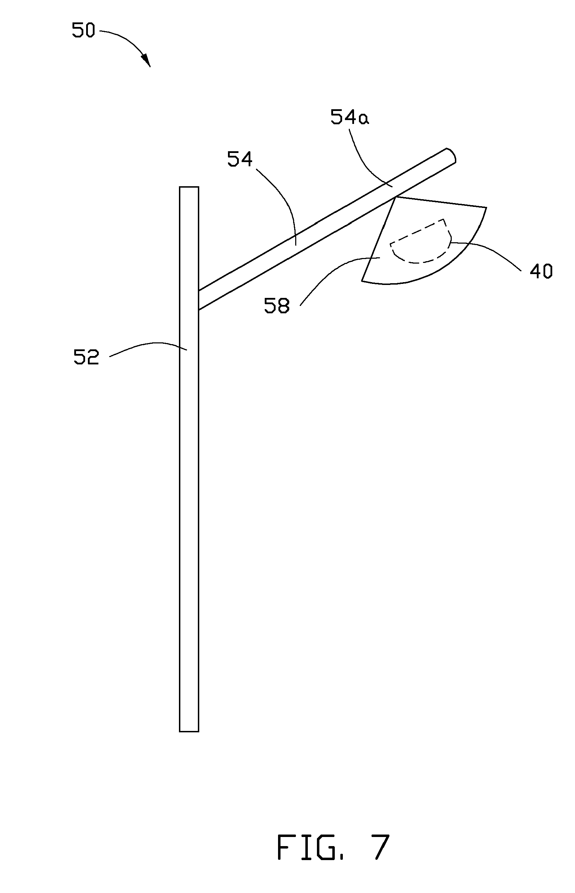

In a second example, when the thickness of the lens 20 is 5.75 millimeters, and the light receiving surface 24 in the coordinate system satisfies an equation (5): Zs1= $-0.12187833X^2+0.0018178591X^4-0.50157092Y-0.12337308Y^2+0.014716134Y^3+0.0058 431778Y^4+0.0003802297Y^5-9.372616e^{-6}Y^6-4.215558-4e^{-7}Y^7$, and the light emitting surface 26 satisfies an equation (6): Zs2= $-0.014687489X^2-0.00024845805X^4+0.21957404Y-0.040318982Y^2+0.00018028789Y^3-0. 00057829182Y^4+7.2289125e^{-5}Y^5-2.9380745e^{-6}Y^6-3.7705378e^{-7}Y^7$ the illumination distribution of light emitted from the light source device 40 is shown in FIG. 7. As illustrated in FIG. 7, the illumination distribution of light emitted from the light source device 40 is uniform.

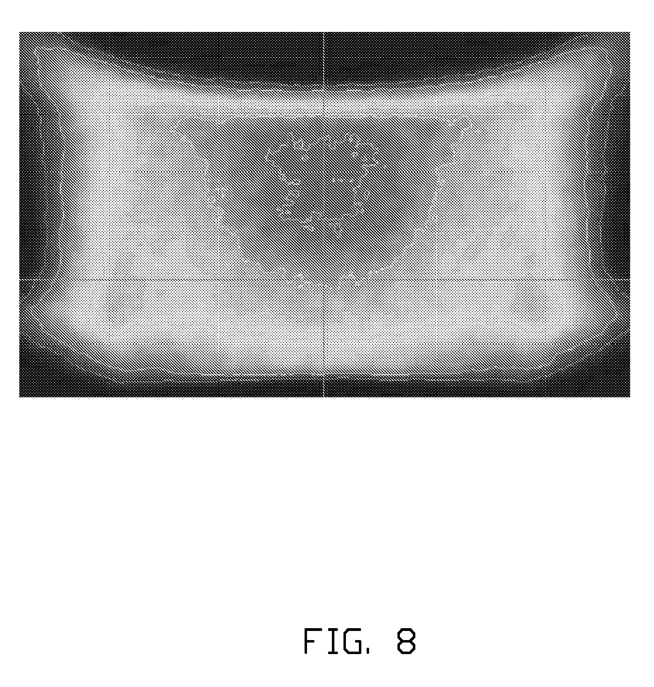

In a third example, when the thickness of the lens 20 is 12 millimeters, and the light receiving surface 24 in the coordinate system satisfies an equation (7): Zs1= $0.019487445X^2+6.3358674e^{-5}X^4-O.I8I70809Y-0.00014306425Y^2+0.00029567987Y^3-4.4 529189e-6Y^4-7.7810971e^{-7}Y^5$, and the light emitting surface 26 satisfies an equation (8): Zs2=$-0.020936489X^2-0.000-10064569X^4+0.28405794Y-0.034359808Y^2+0.00019649816 Y^3-3.920141e^{-5}Y^4-2.1103624e^{-6}Y^5$, the illumination distribution of light emitted from the light source device 40 is shown in FIG. 8. As illustrated in FIG. 8, the illumination distribution of light emitted from the light source device 40 is uniform.

In a fourth example, when the thickness of the lens 20 is 18 millimeters, and the light receiving surface 24 in the coordinate system satisfies an equation (9): Zs1= $-0.013354492X^2+2.0870879e^{-5}X^4-0.24258993Y-0.00044294258Y^2+0.00022224767Y^3+8 . 8564155e^{-6}Y^4+1.0228049e^{-7}Y^5$, and the light emitting surface 26 satisfies an equation (10):

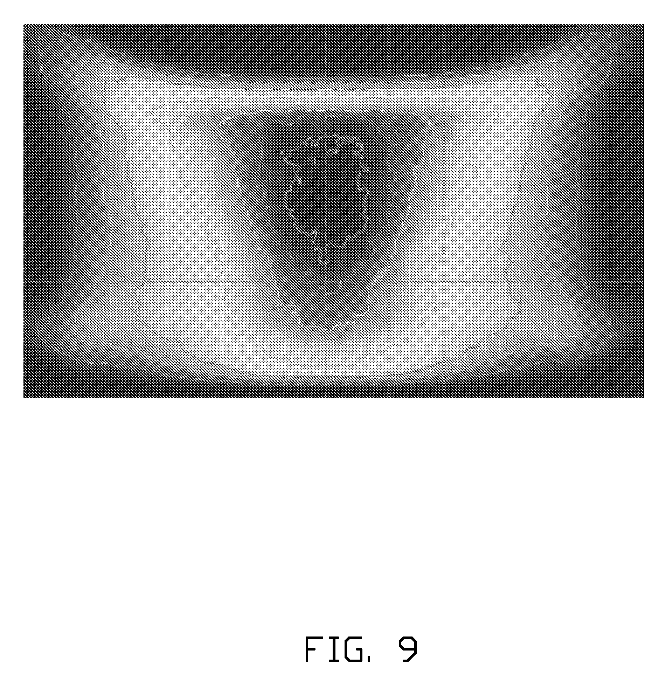

Zs2=$-0.014051887X^2-3.0790823e^{-5}X^4+0.41793402Y-0.02407858Y^2+0.00012437391Y^3-2.9332272e^{-6}Y^4-4.1978777e^{-7}Y^5$, the illumination distribution of light emitted from the light source device 40 is shown in FIG. 9. As illustrated in FIG. 9, the illumination distribution of light emitted from the light source device 40 is uniform.

It is to be understood, however, that even though numerous characteristics and advantages of the present embodiments have been set fourth in the foregoing description, together with details of the structures and functions of the embodiments, the disclosure is illustrative only, and changes may be made in details, especially in matters of shape, size, and arrangement of parts within the principles of the invention to the full extent indicated by the broad general meaning of the terms in which the appended claims are expressed.

**Claims**

1. A lens for modulating illumination distribution of light emitted from a light emitting diode, comprising:

   a light receiving surface configured for entrance of the light from the light emitting diode into the lens; and
   a light emitting surface opposite to the light receiving surface and configured for radiation of the light from the light emitting diode out of the lens;
   wherein in a coordinate system, the light receiving surface satisfies an equation (1):

$$Z_{S1} = \sum_{i=1}^{N_1} a_i X^{2i} + \sum_{j=1}^{N_2} b_j Y^j ,$$

   , wherein $a_i$ and $b_j$ are aspheric coefficients, and key aspheric coefficients comprise $a_1$ and $b_1$, and $a_1$ and $b_1$ satisfy formulas: $-0.5 < a_1 < 0$, $-0.7 < b_1 < 0$, wherein in the coordinate system, the light emitting surface satisfies an equation

$$(2): Z_{S2} = \sum_{i=1}^{N_1} c_i X^{2i} + \sum_{j=1}^{N_2} d_j Y^j ,$$

   wherein $c_i$ and $d_j$ are aspheric coefficients, and key aspheric coefficients comprise $c_1$ and $d_1$,

and $c_1$ and $d_1$ satisfy formulas:-0.3 $<c_1<0,0<$ $d_1<0.6$.

2. The lens as claimed in claim 1, wherein when $N_2 \geqq 2$, the key aspheric coefficients further comprise $b_2$, and $b_2$ satisfies a formula:-0.3 $< b_2 < 0$ in the formula

(1): $$Z_{S1} = \sum_{i=1}^{N_1} a_i X^{2i} + \sum_{j=1}^{N_2} b_j Y^j ,$$ and the key aspheric coefficients further comprise $d_2$, and $d_2$ satisfies a formula: -0.2 $< d_2 < 0$ in the formula (2):

$$Z_{S2} = \sum_{i=1}^{N_1} c_i X^{2i} + \sum_{j=1}^{N_2} d_j Y^j .$$

3. The lens as claimed in claim 1, wherein the lens further comprises a bottom surface, four first side surfaces and four second side surfaces, the light receiving surface is positioned between the bottom surface and the light emitting surface to form a receiving space, the light emitting surface is connected to the bottom surface at four sides of the bottom surface by the four first side surfaces, the light receiving surface is connected to the bottom surface at four sides of the light receiving surface by the four second side surfaces, the receiving space is defined by the light receiving surface and the four second side surfaces cooperatively.

4. The lens as claimed in claim 3, wherein the lens satisfies an equation: Zs1= -0.33317477X²+ 0.017585354X⁴-0.49846721Y-0.12403694Y²+ 0.014682927Y³+0.00586 0549Y⁴+ 0.00037786467Y⁵-9.5791225e⁻⁶Y⁶- 3.6177981e⁻⁷Y⁷, the light emitting surface satisfies an equation: Zs2= -0.0091912965X²-0.00029706043X⁴+ 0.22221825Y- 0.040709864Y²+0.00019714964Y³- 0.00057313259Y⁴+7.2463011e⁻⁵Y⁵- 3.1323774e⁻⁶Y⁶-3.5999606e⁻⁷Y⁷

5. The lens as claimed in claim 3, wherein the lens satisfies an equation: Zs1= -0.12187833X²+ 0.0018178591X⁴-0.50157092Y-0.12337308Y²+ 0.014716134Y³+0.0058 431778Y⁴+ 0.0003802297Y⁵- 9.372616e⁻⁶Y⁶- 4.2155584e⁻⁷Y⁷, the light emitting surface satisfies an equation: Zs2= -0.0091912965X²-0.00029706043X⁴+ 0.22221825Y- 0.040709864Y²+0.00019714964Y³- 0.00057313259Y⁴+7.2463011e⁻⁵Y⁵- 3.1323774e⁻⁶Y⁶-3.5999606e⁻⁷Y⁷

6. The lens as claimed in claim 3, wherein the lens satisfies an equation: Zs1= 0.019487445X²+ 6.3358674e⁻⁵X⁴-0.18170809Y-0.00014306425Y²+0.00029567987Y³-4.4 529189e⁻⁶Y⁴- 7.7810971e⁻⁷Y⁵, the light emitting surface satisfies an equation: Zs2= -0.020936489X²-0.000100- 64569X⁴+0.28405794Y-0.034359808Y²+ 0.00019649816Y³-3. 920141e⁻⁵Y⁴- 2.1103624e⁻⁶Y⁵.

7. The lens as claimed in claim 3, wherein the lens satisfies an equation: Zs1= -0.013354492X²+ 2.0870879e⁻⁵X⁴-0.24258993Y-0.00044294258Y²+ 0.00022224767Y³+8 .8564155e⁻⁶Y⁴+ 1.0228049e⁻⁷Y⁵, the light emitting surface satisfies an equation: Zs2= -0.014051887X²-3.0790- 823e⁻⁵X⁴+0.41793402Y-0.02407858Y²+ 0.00012437391Y³-2.933 2272e⁻⁶Y⁴- 4.1978777e⁻⁷Y⁵.

8. A light emitting diode lamp, comprising:

   a light emitting diode; and
   a lens comprising:

      a bottom surface;
      a light emitting surface opposite to the bottom surface; and
      a light receiving surface positioned between the bottom surface and the light emitting surface to form a receiving space cooperatively with the bottom surface, the light emitting diode being received in the receiving space, light generated by the light emitting diode entering the lens via the light receiving surface and leaving the lens via the light emitting surface;
      wherein in a coordinate system, the light receiving surface satisfies an equation (1):

$$Z_{S1} = \sum_{i=1}^{N_1} a_i X^{2i} + \sum_{j=1}^{N_2} b_j Y^j ,$$ wherein

$a_i$ and $b_j$ are aspheric coefficients, and key aspheric coefficients comprise $a_1$ and $b_1$, and $a_1$ and $b_1$ satisfy formulas: -0.5 $< a_1 <$ 0, -0.7 $< b_1 <$ 0, wherein in the coordinate system, the light emitting surface satisfies an equation (2):

$$Z_{S2} = \sum_{i=1}^{N_1} c_i X^{2i} + \sum_{j=1}^{N_2} d_j Y^j ,$$ wherein

$c_1$ and $d_j$ are aspheric coefficients, and key aspheric coefficients comprise $c_1$ and $d_1$, and $c_1$ and $d_1$ satisfy formulas: -0.3$<c_1<0,0< d_1<0.6$, wherein the light emitted from the light emitting diode is transmitted to and refracted by the lens to be asymmetric relative to the light emitting diode.

**9.** The light emitting diode lamp as claimed in claim 8, wherein the light emitting diode lamp further comprises a pole, a fixing arm extending from the pole, and a light cover mounted on a distal end of the fixing arm away from the pole, and the lens is received in the light cover.

**10.** The light emitting diode lamp as claimed in claim 8, wherein when $N_2 \geqq 2$, the key aspheric coefficients further comprise $b_2$ and $b_2$ satisfies a formula: $-0.3 < b_2 < 0$ in the formula (1):

$$Z_{S1} = \sum_{i=1}^{N_1} a_i X^{2i} + \sum_{j=1}^{N_2} b_j Y^j \,,$$

, and the key aspheric coefficients further comprise $d_2$ and $d_2$ satisfies a formula: $-0.2 < d_2 < 0$ in the formula (2):

$$Z_{S2} = \sum_{i=1}^{N_1} c_i X^{2i} + \sum_{j=1}^{N_2} d_j Y^j \,.$$

**11.** The light emitting diode lamp as claimed in claim 10, wherein the lens further comprises four first side surfaces and four second side surfaces, the light emitting surface is connected to the bottom surface at four sides of the bottom surface by the four first side surfaces, the light receiving surface is connected to the bottom surface at four sides of the light receiving surface by the four second side surfaces, the receiving space is defined by the light receiving surface and the four second side surfaces cooperatively.

**12.** The light emitting diode lamp as claimed in claim 11, wherein the lens satisfies an equation: Zs1= -0.33317477$X^2$+0.017585354$X^4$- 0.49846721Y 0.12403694$Y^2$+0.014682927$Y^3$+0.005860549$Y^4$+0.00037786467$Y^5$-9.5791225e$^{-6}Y^6$-3.6177981e$^{-7}Y^7$, the light emitting surface satisfies an equation: Zs2= -0.0091912965$X^2$-0.00029706043$X^4$+0.22221825Y- 0.040709864$Y^2$+0.00019714964$Y^3$-0.00057313259$Y^4$+7.2463011e$^{-5}Y^5$-3.1323774e$^{-6}Y^6$-3.5999606e$^{-7}Y^7$.

**13.** The light emitting diode lamp as claimed in claim 11, wherein the lens satisfies an equation: Zs1= -0.12187833$X^2$+0.0018178591$X^4$-0.50157092Y 0.12337308$Y^2$+0.014716134$Y^3$+0.005843178$Y^4$+0.0003802297$Y^5$- 9.372616e$^{-6}Y^6$-4.2155584e$^{-7}Y^7$, the light emitting surface satisfies an equation: Zs2= -0.0091912965$X^2$-0.00029706043$X^4$+0.22221825Y- 0.040709864$Y^2$+0.00019714964$Y^3$-0.00057313259$Y^4$+7.2463011e$^{-5}Y^5$-3.1323774e$^{-6}Y^6$-3.5999606e$^{-7}Y^7$

**14.** The light emitting diode lamp as claimed in claim 11, wherein the lens satisfies an equation: Zs1= 0.019487445$X^2$+6.3358674e$^{-5}X^4$-0.18170809Y-0.00014306425$Y^2$+0.00029567987$Y^3$-4.45291-89e$^{-6}Y^4$-7.7810971e$^{-7}Y^5$, the light emitting surface satisfies an equation (2): Zs2= -0.020936489$X^2$-0.00010064569$X^4$+0.28405794Y-0.034359808$Y^2$+0.00019649816$Y^3$-3.920141e$^{-5}Y^4$-2.1103-624e$^{-6}Y^5$.

**15.** The light emitting diode lamp as claimed in claim 11, wherein the lens satisfies an equation: Zs1= - 0.013354492$X^2$+2.0870879e$^{-5}X^4$- 0.24258993Y-0.00044294258$Y^2$+0.00022224767$Y^3$+8.8564155e$^{-6}Y^4$+1.0228049e$^{-7}Y^5$, the light emitting surface satisfies an equation: Zs2= -0.014051887$X^2$-3.0790823e$^{-5}X^4$+0.41793402Y-0.02407858$Y^2$+0.00012437391$Y^3$-2.9332272e$^{-6}Y^4$-4.1978-777e$^{-7}Y^5$.

10

14

16

12

FIG. 1

FIG. 2

FIG. 3

20

26

24

27

22

28

29

FIG. 4

FIG. 5

FIG. 6

50

54a

54

40

58

52

# FIG. 7

FIG. 8

FIG. 9

FIG. 10

FIG. 11

Europäisches
Patentamt

European
Patent Office

Office européen
des brevets

## EUROPEAN SEARCH REPORT

Application Number

EP 10 18 9459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 487 579 A (NINGBO LIAOYUAN LIGHTING CO LT [CN]) 22 July 2009 (2009-07-22) * abstract; figures 1a-1c * | 1-15 | INV. G02B27/09 H01L33/58 F21V5/04 |
| A | CN 101 571 259 A (ZHENGLIN WANG [CN]) 4 November 2009 (2009-11-04) * figure 6 * | 1-15 | |
| A | CN 101 382 252 A (DONGGUAN MIG TECHNOLOGY CO LTD [CN]) 11 March 2009 (2009-03-11) * figures 1-2 * | 1-15 | |
| A | CN 101 482 652 A (UNIV FUDAN [CN]) 15 July 2009 (2009-07-15) * abstract * | 1-15 | |

TECHNICAL FIELDS
SEARCHED (IPC)

G02B
H01L
F21V

The present search report has been drawn up for all claims

| Place of search | Date of completion of the search | Examiner |
|---|---|---|
| The Hague | 23 February 2011 | Lehtiniemi, Henry |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

## ANNEX TO THE EUROPEAN SEARCH REPORT
## ON EUROPEAN PATENT APPLICATION NO.

EP 10 18 9459

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2011

| Patent document cited in search report | | Publication date | Patent family member(s) | Publication date |
|---|---|---|---|---|
| CN 101487579 | A | 22-07-2009 | NONE | |
| CN 101571259 | A | 04-11-2009 | NONE | |
| CN 101382252 | A | 11-03-2009 | NONE | |
| CN 101482652 | A | 15-07-2009 | NONE | |